# EUROPEAN PATENT APPLICATION

(11) **EP 4 428 174 A1**
(43) Date of publication of application: **11.09.2024**
(21) Application number: 22889971.2
(22) Date of filing: 02.11.2022
(51) Int. Cl.: C08G 65/40, C08K 7/04, C08L 71/08, C08J 5/04, C08J 5/18

(54) **AROMATIC POLYETHER, COMPOSITION, FILM, POWDER, PELLETS, COMPOSITE MATERIAL PRODUCTION METHOD, AND COMPOSITE MATERIAL**

(30) Priority: 02.11.2021 JP 2021179435
(71) Applicant: Idemitsu Kosan Co.,Ltd., Tokyo 100-8321 (JP)
(72) Inventor: SUDO, Ken, Tokyo 100-8321 (JP); SUGA, Koichi, Tokyo 100-8321 (JP); SENGA, Minoru, Tokyo 100-8321 (JP); ITO, Kenta, Tokyo 100-8321 (JP)
(74) Representative: Hoffmann Eitle
(86) International application number: PCT/JP2022/040967
(87) International publication number: WO 2023/080151

(57) **Abstract**

An aromatic polyether including a structural unit represented by the following formula (1) and a structural unit represented by the following formula (2), wherein the melt viscosity η₁₂ [Pa.s] measured at a shear rate 12 [1/s] and the melt viscosity η₁₂₀₀ measured at a shear rate 1200 [1/s] satisfy a condition of η₁₂₀₀<4.2×η₁₂^{0.55}, when the aromatic polyether is melted at 400°C.

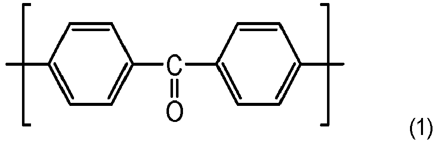

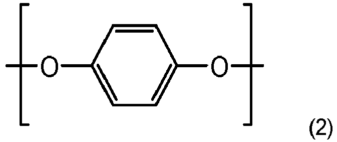

## Description

### Technical Field

The present invention relates to an aromatic polyether, a composition, a film, a powder, a pellet, a method for producing a composite material, and a composite material.

Specifically, the present invention relates to an aromatic polyether, a composition, a film, a powder, a pellet, a method for producing a composite material, and a composite material, having excellent molding processability. Further, the present invention relates to an aromatic polyether having excellent mechanical strength, a composition, a film, a powder, a pellet, a method for producing a composite material, and a composite material.

### Background Art

A composite material is known in which a resin is reinforced with a continuous fiber such as carbon fiber or glass fiber. In recent years, such composite materials have been used as substitutes for metals, such as are also used in the exterior of aircraft.

As the resin of such a composite material, a thermosetting resin such as an epoxy resin or a phenol resin is generally used. However, in a composite material using a thermosetting resin, it is difficult to join the composite materials to each other, and it is necessary to form the entire shape of the component at once. In addition, since the thermosetting resin requires a curing time, there is also a limit to improvement in productivity.

Therefore, it has been attempted to use a thermoplastic resin instead of a thermosetting resin. Examples of a composite material using an aromatic polyether as a thermoplastic resin include Patent Documents 1 to 3.

### Related Art Documents

### Patent Documents

[Patent Document 1] JP H 2-247229 A
[Patent Document 2] JP 2015-17343 A
[Patent Document 3] WO 2020/040121 A1

### Summary of the Invention

However, the aromatic polyether of the prior art including Patent Document 1 has found room for further improvement from the viewpoint of improving the molding processability. It has also been found that there is room for further improvement in terms of improving the mechanical strength, in particular the mechanical strength of a composite material including a continuous fiber and an aromatic polyether.

An object of the present invention is to provide an aromatic polyether, a composition, a film, a powder, a pellet, a method for producing a composite material, and a composite material, having excellent molding processability. Another object of the present invention is to provide an aromatic polyether, a composition, a film, a powder, a pellet, a method for producing a composite material, and a composite material, having excellent mechanical strength.

As a result of intensive studies, the present inventors have found that an aromatic polyether having a specific melt property is excellent in moldability, and have completed the present invention. Further, the present inventors have found, as a result of intensive studies, that an aromatic polyether having a specific melting property has excellent mechanical strength, and in particular, can improve the mechanical strength of a composite material containing a continuous fiber and an aromatic polyether, and have completed the present invention.

According to the present invention, the following aromatic polyether and the like can be provided.
1. An aromatic polyether comprising a structural unit represented by the following formula (1) and a structural unit represented by the following formula (2), wherein the melt viscosity η₁₂ [Pa·s] measured at a shear rate 12 [1/s] and the melt viscosity η₁₂₀₀ measured at a shear rate 1200 [1/s] satisfy a condition of n₁₂₀₀<4.2×η₁₂^{0.55}, when the aromatic polyether is melted at 400°C. 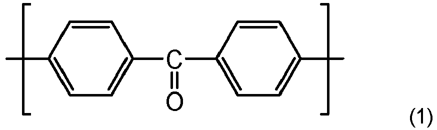 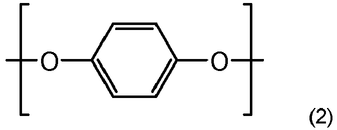
2. The aromatic polyether according to 1, which comprises a structural unit represented by the following formula (3). 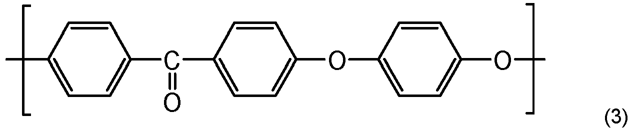
3. The aromatic polyether according to 1 or 2, which satisfies one or both of the following conditions (A) and (B):
   (A) the amount a of fluorine atoms is less than 2 mg/kg,
   (B) the amount b of chlorine atoms is 2 mg/kg or more.
4. A composition comprising the aromatic polyether according to any one of 1 to 3.
5. A composition comprising an aromatic polyether, wherein the aromatic polyether comprises a structural unit represented by the following formula (1) and a structural unit represented by the following formula (2), wherein the melt viscosity η₁₂ [Pa·s] measured at a shear rate 12 [1/s] and the melt viscosity η₁₂₀₀ measured at a shear rate 1200 [1/s] satisfy a condition of η₁₂₀₀<4.2×η₁₂^{0.55}, when the composition is melted at 400°C. 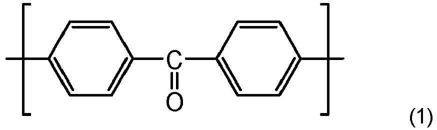 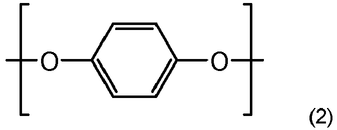
6. The composition according to 5, wherein the aromatic polyether comprises a structural unit represented by the following formula (3). 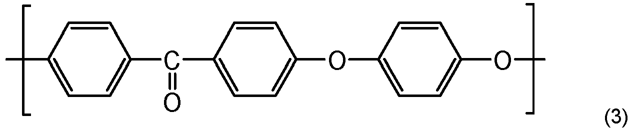
7. The composition according to 5 or 6, which satisfies one or both of the following conditions (A) and (B):
   (A) the amount a of fluorine atoms is less than 2 mg/kg,
   (B) the amount b of chlorine atoms is 2 mg/kg or more.
8. A film comprising the aromatic polyether according to any one of 1 to 3 or the composition according to any one of 4 to 7.
9. A powder comprising the aromatic polyether according to any one of 1 to 3 or the composition according to any one of 4 to 7.
10. A pellet comprising the aromatic polyether according to any one of 1 to 3 or the composition according to any one of 4 to 7.
11. The aromatic polyether according to any one of 1 to 3, the composition according to any one of 4 to 7, the film according to 8, the powder according to 9 or the pellet according to 10, for use in the production of a composite material comprising an aromatic polyether and a continuous fiber.
12. Use of the aromatic polyether according to any one of 1 to 3, the composition according to any one of 4 to 7, the film according to 8, the powder according to 9 or the pellet according to 10 for producing a composite material comprising an aromatic polyether and a continuous fiber.
13. A method for producing a composite material, wherein the composite material is produced using the aromatic polyether according to any one of 1 to 3, the composition according to any one of 4 to 7, the film according to 8, the powder according to 9 or the pellet according to 10, and a continuous fiber.
14. The method for producing a composite material according to 13, which comprises:
   compounding the aromatic polyether, the composition, the film, the powder or the pellet, and the continuous fiber.
15. The method for producing a composite material according to 13, which comprises: pressing the aromatic polyether, the composition, the film, the powder or the pellet, and the continuous fiber under heating.
16. A composite material produced using the aromatic polyether according to any one of 1 to 3, the composition according to any one of 4 to 7, the film according to 8, the powder according to 9 or the pellet according to 10, and a continuous fiber.
17. A composite material comprising the aromatic polyether according to any one of 1 to 3 or the composition according to any one of 4 to 7, and a continuous fiber.

According to the present invention, it is possible to provide an aromatic polyether, a composition, a film, a powder, a pellet, a method for producing a composite material, and a composite material having excellent molding processability. Further, according to the present invention, it is possible to provide an aromatic polyether having excellent mechanical strength, a composition, a film, a powder, a pellet, a method for producing a composite material, and a composite material.

### Brief Description of the Drawings

Fig. 1 shows an example of a method for producing an aromatic polyether/continuous fiber composite material.
Fig. 2 shows a plot on a both logarithmic scale with the horizontal axis as the melt viscosity η₁₂ and the vertical axis as the melt viscosity η₁₂₀₀.
Fig. 3 images of the internals of an aromatic polyether/continuous fiber composite material imaged by a three-dimensional measuring X-ray CT system.

### Mode for Carrying out the Invention

Hereinafter, the aromatic polyether, the composition, the film, the powder, the pellet, the method for producing the composite material, and the composite material of the present invention will be described in detail.

In this specification, "x to y" represents a numerical value range of "x or more and y or less". The upper and lower limits stated for the numerical value range can be combined arbitrarily.

### 1. Aromatic polyether

An aromatic polyether according to an aspect of the present invention is an aromatic polyether including a structural unit represented by the following formula (1) and a structural unit represented by the following formula (2), and
when the aromatic polyether is melted at 400°C, the melt viscosity η₁₂ [Pa·s] measured at the shear rate 12 [1/s] and the melt viscosity η₁₂₀₀ measured at the shear rate 1200 [1/s] satisfy the condition of η₁₂₀₀<4.2×η₁₂^{0.55}.

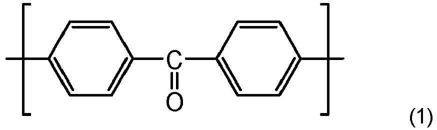

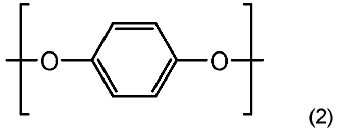

According to the aromatic polyether of the present aspect, it is possible to provide an aromatic polyether, a composition, a film, a powder, a pellet, a method for producing a composite material, and a composite material having excellent molding processability. Furthermore, according to the aromatic polyether of the present embodiment, it is possible to impart excellent mechanical strength, and in particular, excellent mechanical strength to a composite material containing the aromatic polyether and the continuous fiber (also referred to as "aromatic polyether/continuous fiber composite material" in the present specification).

The reason why such an effect is exerted is not necessarily clear, but the following can be presumed.

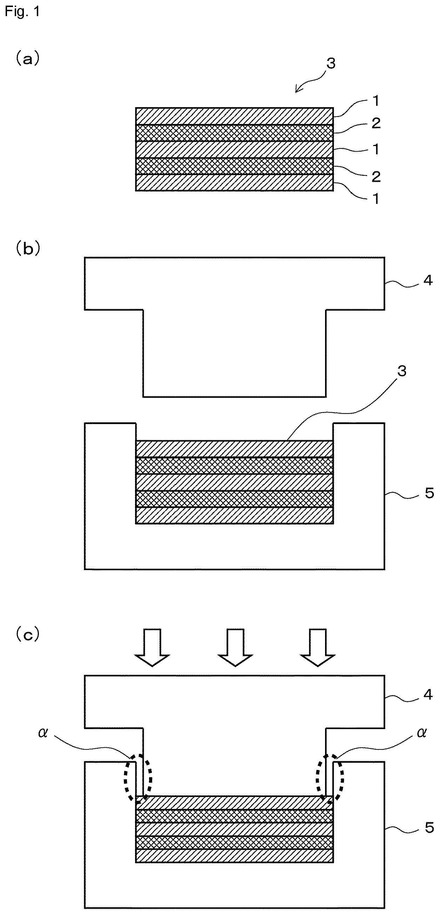

That is, when the aromatic polyether satisfies the condition of η₁₂₀₀<4.2×η₁₂^{0.55}, it means that the aromatic polyether exhibits a low melt viscosity at a high shear rate and a high melt viscosity at a low shear rate. The aromatic polyether exhibiting such a melt viscosity is excellent in molding processability, and can be suitably impregnated into gaps between continuous fibers in an aggregate of continuous fibers, for example, as described below with reference to Fig. 1.

Fig. 1 illustrates an example of a method for producing an aromatic polyether/continuous fiber composite material. In this example, first, as shown in Fig. 1(a), a film 1 containing an aromatic polyether and a woven fabric 2, which is one of continuous fibers, are stacked to form a stacked body 3. As an example, a five-layer stacked body in which three layers of film 1 and two layers of woven fabric 2 are stacked is shown, but the structure of the stacked body is not limited. Next, as shown in Fig. 1(b), the stacked body 3 is supplied into a mold (also referred to as a "press mold") including the convex mold 4 and the concave mold 5. Next, as shown in Fig. 1(c), the mold is heated to melt the film 1, and the stacked body 3 is pressed in the stackingdirection of the stacked body 3 by the convex mold 4 and the concave mold 5 (melt pressing). By this melting press, the molten aromatic polyether contained in the film 1 is impregnated into the gaps between the continuous fibers contained in the woven fabric 2. The mold is then cooled to solidify the aromatic polyether. In this way, an aromatic polyether/continuous fiber composite material impregnated with an aromatic polyether in a woven fabric, which is one of the continuous fibers, can be obtained.

At the time of the melt press described above, normally, the gap between continuous fibers is 1 µm or less, while the gap α between the outer periphery of the fitting portion of the convex type 4 and the inner periphery of the fitting portion of the concave type 5 may be 15 µm or more, 30 µm or more, 50 µm or more, and 80 µm or more. Therefore, the aromatic polyether pressed by the press can not only be impregnated into the gaps between the continuous fibers but also leak into the gaps α. Here, the aromatic polyether according to the present embodiment exhibits a low melt viscosity at a high shear rate and a high melt viscosity at a low shear rate, as described above. Therefore, for relatively small gaps between continuous fibers (the shear rate when entering the gaps becomes high), it is possible to quickly enter (impregnate between continuous fibers) exhibiting a low melt viscosity. On the other hand, for a relatively large gap α (the shear rate when entering the gap becomes low), it exhibits a high melt viscosity, so that entry (leakage into the gap α) is prevented. As a result, the aromatic polyether can be suitably impregnated into the continuous fiber.

Here, a woven fabric that is one of the continuous fibers is exemplified, but the present invention is not limited thereto, and an aggregate of various continuous fibers can be used. The aromatic polyether according to the present embodiment can be suitably impregnated into the gaps between the continuous fibers in the aggregate of the continuous fibers.

The aromatic polyether satisfies the condition of η₁₂₀₀<4.2×η₁₂^{0.55}, preferably satisfies the condition of η₁₂₀₀<4.0×η₁₂^{0.55}, more preferably satisfies the condition of η₁₂₀₀<3.8×η₁₂^{0.55}, and still more preferably satisfies the condition of η₁₂₀₀<3.6×η₁₂^{0.55}. Thus, the effects of the present invention can be better exhibited.

The aromatic polyether may satisfy the condition of η₁₂₀₀>2.0×η₁₂^{0.55}, η₁₂₀₀>2.2×η₁₂^{0.55}, or _{η1200}>2.4×η₁₂^{0.55}, for example.

In one embodiment, the melt viscosity η₁₂ of the aromatic polyether is 100 to 10000 Pa.s, 200 to 9000 Pa·s or 500 to 7000 Pa·s as long as it satisfies the condition of η₁₂₀₀<4.2×η₁₂^{0.55}. This makes it possible to more suitably prevent the above-described PEEK from leaking into the gap α.

In one embodiment, the melt viscosity η₁₂₀₀ of the aromatic polyether is 50 to 1000 Pa.s, 60 to 800 Pa·s or 70 to 500 Pa·s as long as it is satisfied the condition of η₁₂₀₀<4.2×η₁₂^{0.55}. This allows PEEK to be quickly impregnated with the interstices between the continuous fibers.

The melt viscosity η₁₂ and η₁₂₀₀ are measured by the methods described in the Examples.

In the present specification, "the aromatic polyether satisfies the condition of η₁₂₀₀<4.2×η₁₂^{0.55}" means a case where the aromatic polyether satisfies η₁₂₀₀<_{4.2×η12}^{0.55} conditions alone (completely isolated and purified) or a case where the aromatic polyether satisfies the condition of η₁₂₀₀<_{4.2×η12}^{0.55} together with other coexisting components. When other coexisting components are present, it can also be said that the aromatic polyether constitutes the composition together with the other coexisting components, and it can also be said that the composition including the aromatic polyether satisfies η₁₂₀₀<_{4.2×η12}^{0.55} conditions.

In one embodiment, when the aromatic polyether is synthesized, the maximum temperature (maximum temperature reached) of the reaction mixture is 280 to 360°C, preferably 295 to 320°C, and the reaction time at the maximum temperature is 1 to 8 hours, preferably 2 hours or more, 3 hours or more, 4 hours or more, 5 hours or more, 8 hours or less, 6 hours or less, for example, 3 hours or more and 6 hours or less (the upper limit and the lower limit can be arbitrarily combined), whereby the aromatic polyether can satisfy the condition of η₁₂₀₀<4.2×η₁₂^{0.55}.

In synthesizing the aromatic polyether, it is preferred to use a monomer which contains chlorine atoms (e.g., 4,4'-dichlorobenzophenone), whereby the aromatic polyether can satisfy the condition of η₁₂₀₀<4.2×η₁₂^{0.55}. Among all the monomers for introducing the structural units represented by the formula (1), the higher the proportion of the monomer containing a chlorine atom (for example, 50 mol% or more, 60 mol% or more, 70 mol% or more, 80 mol% or more, 90 mol% or more, or even 95 mol% or more) is, the more the condition of η₁₂₀₀<_{4.2×η12}^{0.55} can be suitably satisfied. In order to satisfy the condition of η₁₂₀₀<4.2×η₁₂^{0.55}, it is particularly preferable that the total monomer (100 mol%) for introducing the structural units represented by the formulas (1) is a monomer that contains chlorine atoms. In addition, the aromatic polyether synthesized in this manner may satisfy one or both of the following conditions (A) and (B) described in detail later.
(A) The amount a of fluorine atoms is less than 2 mg/kg.
(B) The amount b of chlorine atoms is 2 mg/kg or more.

In one embodiment, when the aromatic polyether is synthesized, the monomer containing a chlorine atom is used, and the maximum temperature (maximum temperature reached) of the reaction mixture is 280 to 360°C, preferably 295 to 320°C, and the reaction time at the maximum temperature is 1 to 8 hours, preferably 2 hours or more, 3 hours or more, 4 hours or more, 5 hours or more, 8 hours or less, 6 hours or less, for example, 3 hours or more and 6 hours or less (the upper limit and the lower limit can be arbitrarily combined), whereby the condition of η₁₂₀₀<_{4.2×η12}^{0.55} can be satisfied.

In one embodiment, the aromatic polyether can satisfy the condition of η₁₂₀₀<4.2×η₁₂^{0.55}, by intentionally forming branches in the polymer chains of the resulting aromatic polyether when the aromatic polyether is synthesized by the presence (addition) of a trifunctional compound with the monomer to the reaction mix.

In one embodiment, PEEK satisfies the condition of MFR₄/MFR₃₀ ≥ 1.1 between a MFR₄ [g/10 min] measured after preheating the aromatic polyether at 380°C for 4 minutes and a MFR₃₀ [g/10 min] measured after preheating the aromatic polyether at 380°C for 30 minutes.

According to the aromatic polyether satisfying the condition of MFR₄/MFR₃₀ ≧1.1, excellent mechanical strength can be imparted, in particular, excellent mechanical strength can be imparted to the aromatic polyether/continuous fiber composite materials.

The reason why such an effect is exerted is not necessarily clear, but the following can be presumed.

That is, a typical aromatic polyether has a MFR₄/MFR₃₀ of 1.0. This means that the melt flowability of the aromatic polyether does not substantially change after preheating at 380°C. On the other hand, satisfying the condition of MFR₄/MFR₃₀≧1.1 means that the melt flowability of the aromatic polyether decreases after preheating at 380°C. Aromatic polyether exhibiting such reduced melt flowability exhibit excellent mechanical strength due to thickening by heating. As a cause of such a decrease in melt fluidity, for example, formation of a crosslinked structure or the like can be mentioned.

For example, in producing an aromatic polyether/continuous fiber composite material, a method is used in which a heated and melted aromatic polyether is impregnated into gaps between continuous fibers in an aggregate of continuous fibers. This heating thickens the aromatic polyether and can impart excellent mechanical strength to the aromatic polyether/continuous fiber composite material.

When the aromatic polyether satisfies the condition of MFR₄/MFR₃₀≧1.1, MFR₄ and MFR₃₀ of the aromatic polyether are not particularly limited as long as they satisfy the condition of MFR₄/MFR₃₀≧ 1.1.

In one embodiment, MFR₄/MFR₃₀ is 10.0 or less, 8.0 or less, 6.0 or less, 4.0 or less, or 3.0 or less.

In one embodiment, MFR₄ of the aromatic polyether is 0.0001 to 1500.0 g/10 min, 0.0005 to 500.0 g/10 min, 0.001 to 100.0 g/10 min, 0.01 to 100.0 g/10 min, 3.5 to 50.0 g/10 min, 5 to 50.0 g/10 min or 5.0 to 15.0 g/10 min as long as it is satisfied the condition of MFR₄/MFR₃₀≧1.1.

In one embodiment, MFR₃₀ of the aromatic polyether is 0.0001 to 1500.0 g/10 min, 0.0005 to 500.0 g/10 min, 0.001 to 100.0 g/10 min, 0.01 to 100.0 g/10 min or 0.1 to 12.0 g/10 min as long as it is satisfied the condition of MFR₄/MFR₃₀≧1.1.

MFR₄ and MFR₃₀ are measured by the methods described in the Examples.

In the present specification, "the aromatic polyether satisfies the condition of MFR₄/MFR₃₀≧1.1" means a case where the aromatic polyether satisfies the condition of MFR₄/MFR₃₀≧1.1 alone (completely isolated and purified) or a case where the aromatic polyether satisfies the condition of MFR₄/MFR₃₀≧1.1 together with other coexisting components. When other coexisting components are present, it can also be said that the aromatic polyether constitutes the composition together with the other coexisting components, and the composition containing the aromatic polyether satisfies the condition of MFR₄/MFR₃₀ ≧ 1.1.

In one embodiment, the aromatic polyether can satisfy MFR₄/MFR₃₀≧1.1 by adjusting the amount of base present in the aromatic polyether. When a base is present in the aromatic polyether, a base may be added to the aromatic polyether as an additive, or potassium carbonate as a base used in the synthesis of the aromatic polyether may be intentionally left in the aromatic polyether.

In one embodiment, 0.02 to 0.18 parts by mass of potassium carbonate may be added to 100 parts by mass of the aromatic polyether (the "100 parts by mass " is the amount of the aromatic polyether alone and does not include the amount of other components such as potassium carbonate). The amount of potassium carbonate to be added is more preferably 0.02 to 0.09 parts by mass, 0.02 to 0.06 parts by mass or 0.02 to 0.04 parts by mass. Accordingly, it is possible to suitably satisfy the condition of MFR₄/MFR₃₀≧1.1.

In one embodiment, pH at washing the aromatic polyether is adjusted to greater than 7.0 and 10 or less, more preferably from 8.0 to 10, and even more preferably from 8.0 to 9.5. Here, the "at washing the aromatic polyether" is, for example, the washing after the synthesis of the aromatic polyether, and when the washing of the aromatic polyether is performed a plurality of times, the final washing is performed. Accordingly, it is possible to suitably satisfy the condition of MFR₄/MFR₃₀≧1.1. In other words, an aromatic polyether having a pH of greater than 7.0 and 10 or less when the aromatic polyether is pulverized and impregnated with water can suitably satisfy the condition of MFR₄/MFR₃₀≧1.1.

A method for obtaining an aromatic polyether satisfying the condition of MFR₄/MFR₃₀ ≧ 1.1 is not limited to a method using a coexisting component such as a base, and for example, a method for introducing a functional group capable of crosslinking the aromatic polyether to each other (for example, crosslinkable at a temperature of 380°C) to the aromatic polyether can also be used. The functional groups introduced into the aromatic polyether can be selected such that the aromatic polyether satisfies the condition of MFR₄/MFR₃₀≧1.1.

In one embodiment, the aromatic polyether satisfies one or both of the following conditions (A) and (B):
(A) the amount a of fluorine atoms is less than 2 mg/kg,
(B) the amount b of chlorine atoms is 2 mg/kg or more.

The "amount a of fluorine atoms" is a proportion of the mass [mg] of fluorine atoms to the mass [kg] of the sum of the aromatic polyether (not including other coexisting components) and the other coexisting components.

The "amount b of chlorine atoms" is a proportion of the mass [mg] of chlorine atoms to the mass [kg] of the sum of the aromatic polyether (not including other coexisting components) and the other coexisting components.

In one embodiment, the amount a of fluorine atoms in the aromatic polyether is less than 2 mg/kg. Thus, the effects of the present invention can be satisfactorily exhibited. The lower limit is not particularly limited, and may be, for example, 0 mg/kg.

Here, the amount a of the fluorine atom in the aromatic polyether is the sum of the amount a1 of the fluorine atom contained in the molecular structure of the aromatic polyether and the amount a2 of the fluorine atom contained as a component (free component) not contained in the molecular structure of the aromatic polyether.

In one embodiment, the amount a of fluorine atoms in the aromatic polyether can be less than 2 mg/kg by not using a raw material containing fluorine atoms (e.g., 4,4'-difluorobenzophenone, etc.) in the aromatic polyether synthesis or by reducing the amount of the raw material containing fluorine atoms in the aromatic polyether synthesis.

In one embodiment, the free component in the amount a2 of fluorine atoms is one or both of potassium fluoride and 4,4'-difluorobenzophenone.

In one embodiment, the amount b of chlorine atoms in the aromatic polyether is 2 mg/kg or more, 10 mg/kg or more, 100 mg/kg or more, 500 mg/kg or more, 700 mg/kg or more, 1000 mg/kg or more, 2000 mg/kg or more, 33000 mg/kg or more, or 4000 mg/kg or more. Thus, the effects of the present invention can be satisfactorily exhibited. The upper limit is not specifically limited, for example, 10000 mg/kg or less, 9000 mg/kg or less, 8000 mg/kg or less, 7000 mg/kg or less or 6000 mg/kg or less.

The amount b of chlorine atoms in the aromatic polyether is, for example, 2 to 10000 mg/kg, preferably 700 to 9000 mg/kg, and more preferably 1000 to 8000 mg/kg.

Here, the amount b of the chlorine atom is the sum of the amount b1 of the chlorine atom contained in the molecular structure of the aromatic polyether and the amount b2 of the chlorine atom contained as a component (free component) not contained in the molecular structure of the aromatic polyether.

In one embodiment, by including 4,4'-dichlorobenzophenone in the raw material during the aromatic polyether synthesis, the amount b of chlorine atoms in the aromatic polyether can be set to be 2 mg/kg or more. In addition, the amount b of chlorine atoms in the aromatic polyether can be set to be 2 mg/kg or more by using 4,4'-dichlorobenzophenone and hydroquinone as the raw material during the aromatic polyether synthesis and increasing the proportion of the amount of 4,4'-dichlorobenzophenone used to the proportion of amount of hydroquinone used.

In one embodiment, the amount b1 of chlorine atoms is 0 mg/kg or more, 100 mg/kg or more, 200 mg/kg or more, or 400 mg/kg or more. The upper limit is not specifically limited, and may be, for example, 10000 mg/kg or less, 9000 mg/kg or less, 8000 mg/kg or less or 7000 mg/kg or less.

In one embodiment, the amount b2 of chlorine atoms is 0 mg/kg or more, 2 mg/kg or more, 5 mg/kg or more, or 10 mg/kg or more. The upper limit is not particularly limited, and may be, for example, 500 mg/kg or less, 400 mg/kg or less, or 300 mg/kg or less.

In one embodiment, the free components in the chlorine-atom the amount b2 of chlorine atoms are one or both of potassium chloride and 4,4'-dichlorobenzophenone.

The chlorine atom contained in the aromatic polyether as potassium chloride, which is a free component, is determined by the following method.

### <Method for measuring chlorine atoms contained as potassium chloride as free component in aromatic polyether>

The solid sample (aromatic polyether) is ground in a blender, washed with acetone and water in this order, and dried in an explosion-proof dryer at 180°C. When the reaction mixture (product) immediately after the reaction to produce the aromatic polyether is used as a sample, the product is cooled and solidified after the completion of the reaction to obtain the solid sample. The blender used is not particularly limited, and for example, a 7010HS manufactured by Warling Corporation can be used.

Approximately 1 g of the dried sample is weighed, and an ultrapure water 100 ml (I: liter) is added thereto, and the mixture is stirred at a liquid temperature of 50°C for 20 minutes, allowed to cool, and filtered to separate the solid content and the aqueous solution. The aqueous solution is analyzed by ion chromatography and the chloride ions in the aqueous solution are quantified based on a calibration curve made from a reference of known concentration. The ion chromatographic conditions are as follows.

### <Ion chromatograph>

Analyzer: Metrohm 940 IC Vario Fisher Scientific Inc.
Column: Using (Metrosep A Supp 5 Guard) as a guard column and (Metrosep A Supp 4) as a separating column in connection (both columns are manufactured by Metrohm)
Eluent: Na₂CO₃ (1.8 mmol/L)+NaHCO(1.7 mmol/L)
Flow rate: 1.0 mL/min
Column temperature: 30°C
Measurement mode: suppressor method
Detector: electrical conductivity detector

The chlorine atom contained in the aromatic polyether as the free component 4,4'-dichlorobenzophenone is determined by the following method.

### <Method for measuring chlorine atoms contained as 4,4'-dichlorobenzophenone as free component in aromatic polyether>

The solid sample (aromatic polyether) is ground in a blender, washed with acetone and water in this order, and dried in an explosion-proof dryer at 180°C. When the reaction mixture (product) immediately after the reaction to produce the aromatic polyether is used as a sample, the product is cooled and solidified after the completion of the reaction to obtain the solid sample. The blender used is not particularly limited, and for example, a 7010HS manufactured by Warling Corporation can be used.

Approximately 1 g of the dried sample is weighed into an eggplant flask, to which acetone 10 ml and boiling stone are added and heated to reflux in a water bath for 5 hours. After allowing to cool to room temperature, the solid is removed by filtration. The resulting acetone solution is dried by an evaporator and then redissolved by adding acetone 10 ml with a hole pipette. The amount (mg/kg) of 4,4'-dichlorobenzophenone in the sample is calculated by measured this with gas chromatography. The amount (mg/kg) of chlorine atoms contained as the free component 4,4'-dichlorobenzophenone in the aromatic polyether is calculated by the following formula.

The amount of chlorine atoms (mg/kg) contained as the free component 4,4 '-dichlorobenzophenone in the aromatic polyether = the amount of 4,4 '-dichlorobenzophenone in the sample (mg/kg)÷251.11(molecular weight of 4,4'-dichlorobenzophenone) × 35.45 (atomic weight of chlorine) × 2

The quantitative value of 4,4'-dichlorobenzophenone is determined based on a calibration curve prepared from a reference of known concentrations. The measurement conditions are shown below.
Gas Chromatography
Analyzer: Agilent Technologies 7890B Fisher Scientific Inc.
GC columns: Agilent Technologies DB-5MS (length 30 m, internal diameter 0.25 mm, film thicknesses 0.25 µm)
Injection port temperature: 250°C
Oven temperature: 100°C (1 min)→30°C/min→250°C (10 min)
Flow rate: 1 ml/min
Injection volume: 1 µl
Split ratio: 40:1
Detector: FID
Detector temperature: 250°C

In the aromatic polyether according to an embodiment, the structural unit represented by the formula (1) is disposed at one or more ends of a molecular chain by bonding a terminal structure to the structural unit. In this case, the terminal structure bonded to the structural unit may be a chlorine atom (CI).

In the aromatic polyether according to an embodiment, the structural unit represented by the formula (2) is disposed at one or more ends of a molecular chain by bonding a terminal structure to the structural unit. In this case, the terminal structure bonded to the structural unit may be, for example, a hydrogen atom (H) (when the terminal structure is a hydrogen atom (H), a hydroxyl group is formed together with the oxygen atom (O) in the structural unit.).

The terminal structure of the aromatic polyether may be, for example, a structure in which the above-described chlorine atom (CI) or hydroxyl group is replaced with a hydrogen atom (H) or the like. The terminal structure is not limited to these examples, and may be any structure.

In one embodiment, the aromatic polyether includes a structural unit represented by the following formula (3). The aromatic polyether containing structural units represented by the formula (3) is also referred to as polyether ether ketone (abbreviation "PEEK").

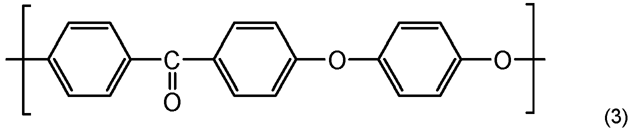

In one embodiment, the aromatic polyether does not contain other structural units than the structural units represented by the formula (3). However, the terminal of the molecular chain may have a terminal structure as described above.

In one embodiment,
the proportion (% by mass) of the structural unit represented by the formula (3) based on (i) the moiety formed by removing the terminal structure from the entire PEEK, or
based on (ii) the total amount of all the structural units constituting PEEK is 50% by mass or more, 60% by mass or more, 70% by mass or more, 80% by mass or more, 90% by mass or more, 95% by mass or more, 97% by mass or more, 99% by mass or more, 99.5% by mass or more, or 100% by mass.

In one embodiment, in PEEK, the molar ratio ([1A]:[2A]) of the structural unit represented by the formula (1) to the structural unit represented by the formula (2) is 47.5:52.5 to 52.5:47.5, 48.0:52.0 to 52.0:48.0, 48.5:51.5 to 51.5:48.5, 49.0:51.0 to 51.0:49.0 or 49.5:50.5 to 50.5:49.5.

In PEEK, the number of moles of the structural unit represented by the formula (1) may be larger than, smaller than, or equal to the number of moles of the structural unit represented by the formula (2).

When the total amount of the structural units represented by the formulas (1) and (2) contained in all the monomers constituting PEEK is 100% by mass, the molar ratio is usually 1:1.

Hereinafter, methods for producing PEEK will be described in detail.

In one embodiment, PEEK can be produced, for example, by reacting 4,4'-dihalogenobenzophenone with hydroquinone.

4,4'-dihalogenobenzophenone and hydroquinone are monomers for polymerizing an aromatic polyether.

Through the step of reacting 4,4'-dihalogenobenzophenone and hydroquinone, an aromatic polyether can be obtained as a copolymer of these compounds (monomer units).

4,4'-dihalogenobenzophenone and hydroquinone are readily synthesized and are also commercially available.

The 4,4'-dihalogenobenzophenone is not particularly limited, and the two halogen atoms may be the same or different from each other. The two halogen atoms may each independently be a fluorine atom, a chlorine atom, a bromine atom, or an iodine atom. Specific examples of the 4,4'-dihalogenobenzophenone include 4,4'-difluorobenzophenone, 4,4'-dichlorobenzophenone, and the like, and among them, 4,4'-dichlorobenzophenone is preferable.

In the following description, the "reactant mixture" is a reaction system from the start of the reaction of 4,4'-dihalogenobenzophenone and hydroquinone to the completion of the reaction, preferably in the form of a solution containing a solvent to be described later, in addition to these monomers. The composition of the reaction mixture may change as the reaction proceeds. Usually, as the reaction proceeds, the concentration of the reactants (4,4'-dihalogenobenzophenone and hydroquinone) in the reaction mixture decreases and the concentration of the product (aromatic polyether) increases.

The "maximum temperature" of the reaction mixture is the maximum temperature reached by the reaction mixture in the process from the start of the reaction of 4,4'-dihalogenobenzophenone and hydroquinone to the completion of the reaction (highest attained temperature).

The maximum temperature of the reaction mixture is not particularly limited, and is, for example, 260 to 360°C, preferably greater than 290°C and 360°C or less, more preferably 295 to 360°C, and still more preferably 295 to 320°C.

In one embodiment, the method for producing an aromatic polyether according to this aspect includes holding the reaction mixture at 180 to 220°C for 0.5 to 2 hours, preferably 0.6 to 1.8 hours, more preferably 0.7 to 1.5 hours (hereinafter also referred to as "temperature holding (i)"). As a result, the reaction can be accelerated while suppressing the volatilization of the raw material, and an aromatic polyether having a higher molecular weight can be obtained.

In one embodiment, the method for producing an aromatic polyether according to this aspect includes: holding the reaction mixture at 230 to 270°C for 0.5 to 2 hours, preferably 0.6 to 1.8 hours, more preferably 0.7 to 1.5 hours (hereinafter also referred to as " temperature holding (ii)"). As a result, the reaction can be accelerated while suppressing the volatilization of the raw material, and an aromatic polyether having a higher molecular weight can be obtained.

In one embodiment, the method for producing an aromatic polyether according to this aspect includes: holding the reaction mixture at 280 to 360°C for 1 to 8 hours, preferably 2 hours or more, 3 hours or more, 4 hours or more, 5 hours or more, 8 hours or less, 6 hours or less, for example, 3 hours or more and 6 hours or less (the upper limit and the lower limit can be arbitrarily combined) (hereinafter also referred to as " temperature holding (iii)"). As a result, an aromatic polyether having a desired molecular weight can be obtained.

In one embodiment, the method for producing an aromatic polyether according to this aspect may include two or three members selected from the group consisting of temperature holding (i) to (iii) above. Preferably, the two or three temperature holding is carried out in order of decreasing temperature. During the two or three temperature holding, the reaction mixture can include raising the temperature.

The speed of heating in raising the temperature of the reactant is not particularly limited and may be, for example, 0.1 to 15°C/min, 0.1 to 10°C/min, 0.1 to 8°C/ min or 0.1 to 5°C/ min. As a result, the reaction can be accelerated while suppressing the volatilization of the raw material, and an aromatic polyether having a higher molecular weight can be obtained.

In one embodiment, the method for producing an aromatic polyether according to the present aspect is such that the time from the time when the temperature of the reaction mixture reaches 150°C to the time when the maximum temperature is reached is 2.0 to 10 hours.

In one embodiment, the reaction mixture includes a solvent. The reaction mixture including the solvent may be in the form of a solution. The solution may include 4,4'-dichlorobenzophenone and hydroquinone dissolved in a solvent.

The solvent is not particularly limited, and for example, a neutral polar solvent can be used. Examples of neutral polar solvents include N,N-dimethylformamide, N,N-diethylformamide, N,N-dimethylacetamide, N,N-diethylacetamide, N,N-dipropylacetamide, N,N-dimethylbenzoic acid amide, N-methyl-2-pyrrolidone, N-ethyl-2-pyrrolidone, N-isopropyl-2-pyrrolidone, N-isobutyl-2-pyrrolidone, N-n-propyl-2-pyrrolidone, N-n-butyl-2-pyrrolidone, N-cyclohexyl-2-pyrrolidone, N-methyl-3-methyl-2-pyrrolidone, N-ethyl-3-methyl-2-pyrrolidone, N-methyl-3,4,5-trimethyl-2-pyrrolidone, N-methyl-2-piperidone, N-ethyl-2-piperidone, N-isopropyl-2-piperidone, N-methyl-6-methyl-2-piperidone, N-methyl-3-ethylpiperidone, dimethyl sulfoxide, diethyl sulfoxide, 1-methyl-1-oxosulfolane, 1-ethyl-1-oxosulfolane, 1-phenyl-1-oxosulfolane, N,N'-dimethylimidazolidinone, and diphenylsulfone. Of these, diphenylsulfone is particularly preferred.

In one embodiment, the reaction mixture includes an aromatic sulfone such as diphenylsulfone and the like, and the amount of the solvent having a boiling point of 270 to 330°C is 0 parts by mass or more and less than 1 part by mass with respect to 100 parts by mass of the aromatic sulfone. Thus, control of the reaction temperature can be easily.

The reaction mixture may include one or two or more solvents. In particular, it is preferred that the reaction mixture includes only one solvent (single solvent) as solvent, which simplifies the process.

In one embodiment, the reaction mixture includes potassium carbonate. Thus, the reaction is accelerated.

In one embodiment, the reaction mixture includes other alkali metal carbonates other than potassium carbonate, alkali metal salts such as alkali metal bicarbonates. These alkali metal salts may be used in combination with potassium carbonate. For example, potassium carbonate and sodium carbonate may be used in combination.

Examples of the alkali metal carbonate include lithium carbonate, rubidium carbonate, and cesium carbonate.

Examples of alkali metal carbonate salts that can be possible used with potassium carbonate include lithium bicarbonate, sodium bicarbonate, potassium bicarbonate, rubidium bicarbonate, cesium bicarbonate, and the like.

These alkali metal salt may be used alone, or two or more kinds thereof may be used in combination.

The total concentration of alkali metal salts (including potassium carbonate and other alkali metal salts described above) in the reaction mixture is not particularly limited.

In one embodiment, the total amount of the alkali metal salt in the reaction mixture is 100 parts by mole or more, and is 180 parts by mole or less, 160 parts by mole or less, 140 parts by mole or less, or 120 parts by mole or less based on 100 parts by mole of hydroquinone to be blended in the reaction mixture. When the total amount of the alkali metal salt is 100 parts by mole or more, the reaction-time can be shortened. When the total amount of the alkali metal salt is 180 parts by mole or less, the formation of the gel-component can be suppressed. The total amount of the alkali metal salt in the reaction mixture is, for example, 100 to 180 parts by mole, preferably 100 to 140 parts by mole, and more preferably 100 to 120 parts by mole, based on 100 parts by mole of hydroquinone to be blended in the reaction mixture.

In one embodiment, potassium carbonate is blended as the alkali metal salt in the blending amount described above.

In one embodiment, the reaction mixture does not include any of sodium fluoride, potassium fluoride, rubidium fluoride and cesium fluoride. In this aspect, an aromatic polyether having a high molecular weight can be obtained without including these compounds. In addition, by not including these compounds, it is possible to avoid the residual of these compounds in the resulting aromatic polyether, and it is possible to reduce the purification cost. As a result, an aromatic polyether capable of exhibiting excellent mechanical strength by blending an inorganic compound can be produced at low cost.

The molar ratio of 4,4'-dihalogenobenzophenone (DHBP) to hydroquinone (HQ) ([DHBP]:[HQ]) to be reacted is not particularly limited.

The molar ratio ([DHBP]:[HQ]) can be appropriately adjusted in order to control the molecular weight of the resulting aromatic polyether.

In one embodiment, the molar ratio ([DHBP]:[HQ]) is 47.5:52.5 to 52.5:47.5, 48.0:52.0 to 52.0:48.0, 48.5:51.5 to 51.5:48.5, 49.0:51.0 to 51.0:49.0 or 49.5:50.5 to 50.5:49.5.

The mol number of the 4,4'-dihalogenobenzophenone (DHBP) may be greater than, less than, or equal to the mol number of the hydroquinone (HQ).

In one embodiment, the concentration (based on the blending amount) of the sum of 4,4'-dihalogenobenzophenone and hydroquinone in the reaction mixture is not so limited, for example, 1.0 mol/I or more, 1.2 mol/I or more, 1.3 mol/I or more, 1.4 mol/I or more, or 1.5 mol/I or more, and 6.0 mol/I or less, 5.0 mol/I or less, or 4.0 mol/I or less. In addition, the concentration (based on the blending amount) of the sum of 4,4'-dihalogenobenzophenone and hydroquinone in the reaction mixture is, for example, 1.0 to 6.0 mol/l, preferably 1.3 to 5.0 mol/l, and more preferably 1.5 to 4.0 mol/l.

In one embodiment, no other monomer other than 4,4'-dihalogenobenzophenone and hydroquinone is used as the monomer to be subjected to the reaction described above.

In one embodiment, other monomers other than 4,4'-dihalogenobenzophenone and hydroquinone are used in combination with the above-described reaction as long as the effects of the present invention are not impaired.

In one embodiment, the proportion (% by mass) of the total of 4,4'-dihalogenobenzophenone and hydroquinone, based on the total monomer subjected to the reaction, is 50% by mass or more, 60% by mass or more, 70% by mass or more, 80% by mass or more, 90% by mass or more, 95% by mass or more, 97% by mass or more, 99% by mass or more, 99.5% by mass or more, or 100% by mass.

In one embodiment, 70% by mass or more, 80% by mass or more, 90% by mass or more, 95% by mass or more, 99% by mass or more, 99.5% by mass or more, 99.9% by mass or more, or substantially 100% by mass of the reaction mixture at the start of the reaction:
4,4'-dihalogenobenzophenone, hydroquinone, alkali metal salts and solvents;
4,4'-dihalogenobenzophenone, hydroquinone, one or more alkali metal salts selected from the group consisting of potassium carbonate and sodium carbonate, and diphenylsulfone; or
4,4'-dihalogenobenzophenone, hydroquinone, potassium carbonate and diphenylsulfone.

In the case of "substantially 100% by mass" thereof, inevitable impurities may be included therein.

The reaction of 4,4'-dihalogenobenzophenone with hydroquinone can be carried out in an inert gas atmosphere. The inert gas is not particularly limited, and examples thereof include nitrogen, argon gas and the like.

In one embodiment, the aromatic polyether includes a structural unit represented by the following formula (4). The aromatic polyether containing structural units represented by the formula (4) is also referred to as polyether ether ether ketone (abbreviation "PEEEK").

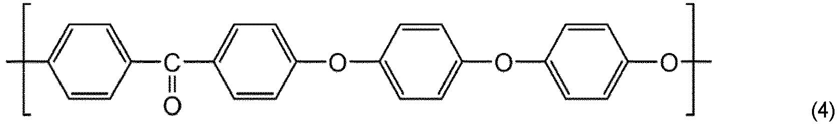

The structural unit represented by the formula (3) and the structural unit represented by the formula (4) are different from each other, and in the aromatic polyether, the partial structure corresponding to the structural unit represented by the formula (4) is regarded as the structural unit represented by the formula (4), and is not regarded as the repeating unit represented by the formula (3).

In one embodiment, the aromatic polyether does not contain other structural units than the structural unit represented by the formula (4). However, the terminal of the molecular chain may have a terminal structure as described above.

In one embodiment, the method for producing an aromatic polyether containing structural units represented by the formula (4) is the same as the method for producing PEEK except that 4,4'-dihydroxydiphenyl ether is used instead of hydroquinone, and the description given for the PEEK production method is incorporated.

In one embodiment, the aromatic polyether includes a structural unit represented by the formula (3) and a structural unit represented by the formula (4). An aromatic polyetherincluding a structural unit represented by the formula (3) and a structural unit represented by the formula (4) is also referred to as a polyether ether ketone/polyether ether ether ketone copolymer (abbreviated as "PEEK/PEEEK copolymer").

The ratio [mol%] of the number of moles of the structural unit represented by the formula (4) to the sum of the number of moles of the structural unit represented by the formula (3) and the number of moles of the structural unit represented by the formula (4) contained in PEEK/PEEEK copolymer is not particularly limited, and is, for example, greater than 0% and less than 100%, preferably 0.1 to 99.9 mol%, more preferably 0.1 to 50.0 mol%, more preferably 0.1 to 10.0 mol%, and more preferably 0.1 to 5.0 mol%.

In one embodiment, the aromatic polyether does not include structural units other than the structural unit represented by the formula (3) and the structural unit represented by the formula (4). However, the terminal of the molecular chain may have a terminal structure as described above.

In one embodiment, the method for producing an aromatic polyether containing a structural unit represented by the formula (3) and a structural unit represented by the formula (4) is the same as the method for producing PEEK except that a part of hydroquinone is replaced with 4,4'-dihydroxydiphenyl ether (hydroquinone and 4,4'-dihydroxydiphenyl ether are used in combination), and the description given for the PEEK production method is incorporated.

In one embodiment, the aromatic polyether does not include other structural units than the structural units represented by the formula (1) and the formula (2). However, the terminal of the molecular chain may have a terminal structure as described above.

In one embodiment, the aromatic polyether includes other structural units other than the structural units represented by the formula (1) and the formula (2) as long as the effect of the present invention is not impaired.

In one embodiment, the proportion (% by mass) of the total of the structural units represented by the formula (1) and the formula (2) contained in all monomers based on the total monomer to be subjected to the reaction is 50% by mass or more, 60% by mass or more, 70% by mass or more, 80% by mass or more, 90% by mass or more, 95% by mass or more, 97% by mass or more, 99% by mass or more, 99.5% by mass or more, or 100% by mass.

### 2. Composition

The composition according to the first aspect of the present invention includes the aromatic polyether according to an aspect of the present invention.

According to the composition of the first aspect, it is possible to provide an aromatic polyether, a composition, a film, a powder, a pellet, a method for producing a composite material, and a composite material, having excellent molding processability. Furthermore, according to the composition of the first aspect, excellent mechanical strength can be imparted to the aromatic polyether/continuous fiber composite material in particular.

A composition according to a second aspect of the present invention is a composition including an aromatic polyether, wherein the aromatic polyether includes a structural unit represented by the formula (1) and a structural unit represented by the formula (2), and when the composition is melted at 400°C, the melt viscosity η₁₂ [Pa.s] measured at a shear rate 12 [1/s] and the melt viscosity η₁₂₀₀ measured at a shear rate 1200 [1/s] satisfy the condition of η₁₂₀₀<4.2×η₁₂^{0.55}.

The composition according to the second aspect can also provide an aromatic polyether, a composition, a film, a powder, a pellet, a method for producing a composite material, and a composite material, having excellent molding processability. Furthermore, the composition according to the second aspect can also be imparted excellent mechanical strength, particularly excellent mechanical strength to the aromatic polyether/continuous fiber composite material.

With respect to the aromatic polyether contained in the composition according to the second aspect, the description of the aromatic polyether according to an aspect of the present invention is incorporated. However, in the aromatic polyether contained in the composition according to the second aspect, when the aromatic polyether is melted at 400°C, the melt viscosity η₁₂ [Pa.s] measured at the shear rate 12 [1/s] and the melt viscosity η₁₂₀₀ measured at the shear rate 1200 [1/s] may satisfy η₁₂₀₀<4.2×η₁₂^{0.55}, or may not satisfy the conditions. That is, in the composition according to the second aspect, when the composition is melted at 400°C, the melt viscosity η₁₂ [Pa.s] measured at the shear rate 12 [1/s] and the melt viscosity η₁₂₀₀ measured at the shear rate 1200 [1/s] may satisfy the condition of n₁₂₀₀<4.2×η₁₂^{0.55}.

The description of the melt viscosity η₁₂ and η₁₂₀₀ of the aromatic polyether are incorporated by reference, including descriptions of their preferred ranges, for the melt viscosity η₁₂ and η₁₂₀₀ of the composition. The method for measuring the melt viscosity η₁₂ and η₁₂₀₀ of the composition is the same as the method for measuring the melt viscosity η₁₂ and η₁₂₀₀ of the aromatic polyether, except that the composition is used instead of the aromatic polyether as a sample.

In one embodiment of the second aspect, MFR₄ [g/10 min] measured after preheating the composition at 380°C for 4 minutes and MFR₃₀ [g/10 min] measured after preheating the composition at 380°C for 30 minutes satisfy the condition of MFR₄/MFR₃₀≧1.1.

The description of the melt viscosity MFR₄ and MFR₃₀ of the aromatic polyether are incorporated by reference to MFR₄ and MFR₃₀ of the compositions, including descriptions of their preferred range. The method for measuring MFR₄ and MFR₃₀ of the composition is the same as the method for measuring MFR₄ and MFR₃₀ of the aromatic polyether, except that the composition is used instead of the aromatic polyether as a sample.

In one embodiment of the second aspect, the composition satisfies one or both of the following conditions (A) and (B):
(A) the amount a of fluorine atoms is less than 2 mg/kg,
(B) the amount b of chlorine atoms is 2 mg/kg or more.

The "amount a of fluorine atoms" is a proportion of the mass [mg] of fluorine atoms to the mass [kg] of the sum of the aromatic polyether (not including other coexisting components) and the other coexisting components. Here, the mass [kg] of the sum of the aromatic polyether (not including the other coexisting component) and the other coexisting component corresponds to the weight [kg] of the entire composition.

The "amount b of chlorine atoms" is a proportion of the mass [mg] of chlorine atoms to the mass [kg] of the sum of the aromatic polyether (not including other coexisting components) and the other coexisting components. Again, the mass [kg] of the sum of the aromatic polyether (without the other coexisting components) and the other coexisting components corresponds to the weight [kg] of the entire composition.

The method for measuring the amount a of fluorine atoms and the amount b of chlorine atoms in the composition is the same as the method for measuring the amount a of fluorine atoms and the amount b of chlorine atoms in the aromatic polyether, except that the composition is used instead of the aromatic polyether as a sample.

In the following description, the composition according to the first aspect of the present invention and the composition according to the second aspect of the present invention may be collectively referred to as "the composition according to an aspect of the present invention".

Components other than the aromatic polyether included in the composition according to an aspect of the present invention are not particularly limited.

The composition according to an aspect of the present invention is suitably used, for example, for producing a composite material containing an aromatic polyether and a continuous fiber.

### 3. Film

A film according to an aspect of the present invention includes the aromatic polyether according to an aspect of the present invention or the composition according to an aspect of the present invention.

The film according to an aspect of the present invention is suitably used, for example, for producing a composite material containing an aromatic polyether and a continuous fiber.

### 4. Powder

A powder according to an aspect of the present invention includes the aromatic polyether according to an aspect of the present invention or the composition according to an aspect of the present invention.

The powder according to an aspect of the present invention is suitably used, for example, for producing a composite material containing an aromatic polyether and a continuous fiber.

### 5. Pellet

A pellet according to an aspect of the present invention includes the aromatic polyether according to an aspect of the present invention or the composition according to an aspect of the present invention.

The pellet according to an aspect of the present invention is suitably used, for example, for producing of a composite material containing an aromatic polyether and a continuous fiber.

In one embodiment, the composition, the film, the powder or the pellet according to an aspect of the present invention includes an aromatic polyether and other components.

Other components are not particularly limited and include potassium carbonate, other resins that are not the aromatic polyether, and the like. Examples of the other resin include a fluororesin such as polytetrafluoroethylene and the like. Other components may be used alone, or two or more kinds thereof may be used in combination.

In one embodiment, 50% by mass or more, 60% by mass or more, 70% by mass or more, 80% by mass or more, 90% by mass or more, 95% by mass or more, 97% by mass or more, 99% by mass or more, 99.5% by mass or more, or substantially 100% by mass of the composition, the film, the powder or the pellet according to an aspect of the invention is selected from the group consisting of:
the aromatic polyether, or
one or more selected from the aromatic polyether and the other components described above.

In the case of "substantially 100% by mass" thereof, inevitable impurities may be included.

The film, the powder and the pellet according to an aspect of the present invention described above can be formed using methods known in the art using the respective components as materials.

### 6. Composite material

The composite material according to the first aspect of the present invention is produced using the aromatic polyether according to an aspect of the present invention, the composition according to an aspect of the present invention, the film according to an aspect of the present invention, the powder according to an aspect of the present invention, or the pellet according to an aspect of the present invention, and a continuous fiber.

The composite material according to the first aspect exhibits excellent mechanical strength.

The aromatic polyether contained in the composite material according to the first aspect may be the aromatic polyether according to an aspect of the present invention, and may not be the aromatic polyether according to an aspect of the present invention. That is, in the aromatic polyether contained in the composite material according to the first aspect, when the aromatic polyether is melted at 400°C, the melt viscosity η₁₂ [Pa·s] measured at the shear rate 12 [1/s] and the melt viscosity η₁₂₀₀ measured at the shear rate 1200 [1/s] may or may not satisfy the condition of η₁₂₀₀<4.2×η₁₂^{0.55}. It preferably satisfies the condition of η₁₂₀₀<4.2×η₁₂^{0.55}.

The composite material according to the second aspect of the present invention includes the aromatic polyether according to an aspect of the present invention or the composition according to an aspect of the present invention and a continuous fiber.

The composite material according to the second aspect also exhibits excellent mechanical strength.

In the following description, the composite material according to the first aspect of the present invention and the composite material according to the second aspect of the present invention may be collectively referred to as "composite material according to an aspect of the present invention".

The composite material according to an aspect of the present invention is described in more detail below.

As used herein, "continuous fiber" means a fiber that constitutes a woven fabric or a fiber that constitutes unidirectionally aligned unidirectional fibers.

In one embodiment, the continuous fiber is included in the composite material in the form of a woven fabric or unidirectional fibers.

Woven fabric and unidirectional fibers are not particularly limited and may include the continuous fiber. In one embodiment, the woven fabric and the unidirectional fibers are composed of the continuous fiber arranged in a planar.

The continuous fiber included in the composite material is preferably one or more members selected from the group consisting of glass fibers and carbon fibers.

The shape of the continuous fiber is not particularly limited, and may have one or more shapes selected from the group consisting of a woven fabric consisting of rovings and rovings.

In addition, in a case where the member including the continuous fiber has a form of a woven fabric or a unidirectional material, a bundle (fiber bundle) in which the continuous fibers are bundled in one direction can be used. As the member containing the continuous fiber, a bundle of 3000 (3K), 6000 (6K), 12000 (12K), 24000 (24K), 60000 (60K) or the like of the single fibers supplied from the fiber manufacturer as the fiber bundle may be used as it is, or a bundle of these may be used. The fiber bundle may be any of a non-twisted yarn, a twisted yarn, and an untwisted yarn. The fiber bundle may be contained in a state of being opened in a formed body, or may be contained as a state of fiber bundle without being opened. When the member containing the continuous fiber is a woven fabric or a unidirectional material, the molded body can be obtained by immersing the resin in the member.

The type of the carbon fiber is not particularly limited, and various types of carbon fibers such as a PAN fiber made of polyacrylonitrile, a pitch-based fiber made of coal tar pitch in petroleum or coal, and a phenol-based fiber made of a thermosetting resin, for example, a phenol-based fiber made of a phenolic resin can be used.

The carbon fiber may be one obtained by a vapor growth method or may be a recycled carbon fiber (RCF). Carbon fiber is not particularly limited as described above, and at least one carbon fiber selected from the group consisting of PAN-based carbon fiber, pitch-based carbon fiber, thermosetting resin-based carbon fiber, phenol-based carbon fiber, vapor growth carbon fiber, and recycled carbon fiber (RCF) is preferable.

The average fiber diameter of the carbon fibers is preferably 3 to 15 µm, more preferably 5 to 7 µm. The average fiber diameter of the carbon fiber is determined by an arithmetic average of the values measured in accordance with JIS R 7607:2000.

The carbon fiber may have a sizing agent attached to a surface thereof. When the carbon fiber to which the sizing agent is attached is used, the type of the sizing agent can be appropriately selected according to the type of the carbon fiber, and is not particularly limited. Carbon fibers have been commercialized in various products, such as those treated with an epoxy-based sizing agent, a urethane-based sizing agent, or a polyamide-based sizing agent, or those without sizing agent are on sale, and in the invention, the carbon fiber can be used regardless of the type and presence of a sizing agent. In addition, a silane coupling agent such as an aminosilane, an isocyanate silane, or an acrylsilane may be used in combination as the sizing agent.

The type of the glass fiber is not particularly limited, and, for example, glass fibers having various compositions such as E glass, low dielectric glass, silica glass, and the like can be selected and used depending on the purpose and application.

The average fiber diameter of the glass fibers is preferably 5 to 20 µm, more preferably 7 to 17 µm. The average fiber diameter of the glass fiber is determined by arithmetic average of the values measured in accordance with JIS R 7607:2000.

The glass fibers may have a sizing agent attached to the surface. When the glass fiber to which the sizing agent is attached is used, the type of the sizing agent can be appropriately selected according to the type of the glass fiber, and is not particularly limited. Glass fibers have been commercialized in various products, such as those treated with epoxy-based sizing agents, urethane-based sizing agents, vinyl acetate-based sizing agents, or those without sizing agents, and in the present invention, the grass fiber can be used regardless of the type or presence of sizing agents. In addition, a silane coupling agent such as an aminosilane, an isocyanate silane, or an acrylsilane may be used in combination as the sizing agent.

In one embodiment, the average fiber length of the continuous fiber (e.g., carbon fibers or glass fibers) is 25 mm or more, 50 mm or more, or 100 mm or more, and 100 km or less, 10 km or less, 1 km or less, or 100 m or less. The average fiber length of the continuous fiber is calculated by arithmetic average.

In one embodiment, the composite material includes the continuous fiber and an aromatic polyether impregnated in the gap between the continuous fibers. Such a composite material may include, for example, a woven fabric or unidirectional fiber composed of the continuous fiber and an aromatic polyether impregnated in the gap between the continuous fibers.

In one embodiment, the composite material includes the continuous fiber and an aromatic polyether as a matrix. Such the composite material can be so-called as fibrous reinforced thermoplastics (FRTP). For example, unidirectional fiber reinforced plastics can be obtained by using unidirectional fibers as the continuous fiber.

The composite material may be a single composite material or may be a stacked body in which two or more composite materials are stacked. When the composite material is the stacked body, the aromatic polyether may also contribute to the binding of the composite materials to each other.

The composite material may include other components in addition to the aromatic polyether and the continuous fiber. Other components include those described for films, powders, and pellets according to an aspect of the present invention.

In one embodiment, 50% by mass or more, 60% by mass or more, 70% by mass or more, 80% by mass or more, 90% by mass or more, 95% by mass or more, 97% by mass or more, 99% by mass or more, 99.5% by mass or more, or substantially 100% by mass of the composite material includes
the aromatic polyether and the continuous fiber or
the aromatic polyether, the continuous fiber, and one or more selected from other components described above.

In the case of "substantially 100% by mass" thereof, it may contain unavoidable impurities.

The method for producing a composite material described above is not particularly limited.

In one embodiment, a method for producing a composite material includes: contacting and integrating the continuous fiber with the aromatic polyether according to an aspect of the present invention.

In one embodiment, a solution obtained by dissolving the aromatic polyether according to an aspect of the present invention in a suitable solvent, a mixture obtained by mixing the aromatic polyether according to an aspect of the present invention in a suitable vehicle, or a melt of the aromatic polyether according to an aspect of the present invention can be contacted with a continuous fiber and integrated.

In one embodiment, a method for producing a composite material includes: making the composite material with continuous fibers bound by a sizing agent including an aromatic polyether.

In one embodiment, the method for producing a composite material includes: compounding the aromatic polyether according to an aspect of the present invention, the composition according to an aspect of the present invention, the film according to an aspect of the present invention, the powder according to an aspect of the present invention, or the pellet according to an aspect of the present invention, and a continuous fiber.

In one embodiment, a method for producing a composite material includes: pressing under heat, the aromatic polyether according to an aspect of the present invention, the composition according to an aspect of the present invention, the film according to an aspect of the present invention, the powder according to an aspect of the present invention or the pallet according to an aspect of the present invention, and a continuous fiber.

Here, "pressing under heating" refers to pressing in a state where the aromatic polyether, the composition, the film, the powder, or the pellet is heated so as to melt, and is hereinafter also referred to as "melt pressing".

In one embodiment, a method for producing a composite material includes: contacting the film according to an aspect of the present invention with a fabric or unidirectional fiber composed of continuous fibers, followed by melt pressing.

In one embodiment, a method for producing a composite material includes: contacting the powder according to an aspect of the present invention with a fabric or unidirectional fiber composed of continuous fibers, followed by melt pressing.

In one embodiment, a method for producing a composite material includes: melting the pellet according to an aspect of the present invention, contacting the pellet with a fabric or unidirectional fiber composed of continuous fibers, and then melt pressing.

As described above, in the description of the method for producing a composite material, two or more layers of the aromatic polyether according to one embodiment of the present invention and a woven fabric or unidirectional fibers may be alternately arranged to produce a composite material in the form of a stacked body.

In one embodiment, the composite material is planar over the entire surface.

In one embodiment, the composite material is formed in the three-dimensional shape. When the shape of the composite material is "three-dimensional", for example, the composite material may be a curved portion (a sheet including a bent portion).

The method for producing a sheet with the three-dimensional shape is not particular limited.

In one embodiment, a method for producing a three-dimensionally shaped sheet includes impregnating a three-dimensionally shaped fabric or unidirectional fibers with an aromatic polyether.

In one embodiment, a method for producing a sheet with the three-dimensional shape includes impregnating a cloth with an aromatic polyether A to obtain a sheet (e.g., a planar sheet), and then molding the sheet to have the three-dimensional shape. The molding can be performed, for example, by applying pressure to the sheet under heating.

The use of the aromatic polyether, the film, the powder, the pellet, and the composite material according to an aspect of the present invention is not particularly limited, and can be widely used in various applications. The aromatic polyether, the film, the powder, the pellet and the composite material according to an aspect of the present invention are suitable as sliding members, such as aerospace members, gears, and bearings, and, filaments for 3D printers, or the like.

### Examples

Examples of the invention will be described below, but the invention is not limited to these Examples.

### 1. Experiment of the conditions of η₁₂₀₀<_{4.2×η12}^{0.55}

### (Example 1)

A 4-port 2L separable flask was fitted with a stirrer blade, a stirrer, a thermocouple, a nitrogenous inlet tube, a condenser tube, and a receiver, and the reactor was assembled.

Diphenylsulfone (manufactured by Sino-High) of 485.14 g (2.22 mol) was charged into the reactor, the inside of the reactor was filled with nitrogen atmosphere, and the reactor was heated with a mantle heater to melt the diphenylsulfone.

Next, 4,4'-dichlorobenzophenone (manufactured by Sino-High) of 144.23 g (0.574 mol) and hydroquinone (manufactured by FUJIFILM Wako Pure Chemical Corporation, special grade) of 61.70 g (0.560 mol) were charged into a reactor and melted.

Then, when the temperature of the melted mixture reached 150°C, the potassium carbonate of 89.06 g (0.644 mol) (manufactured by Junsei Chemical Co., Ltd., special grade) was charged into the reactor, and the temperature was raised to 200°C at a heating rate of 1°C/min.

The reactor was then held at 200°C for an hour, then heated to 250°C over 70 minutes and held for an hour, and further heated to 300°C over 110 minutes and held for 5 hours.

The reactor was then opened and the reaction liquor was removed to a bat, allowed to cool and solidified.

The solidified material was then washed so that potassium carbonate remained in PEEK.

Specifically, first, the solidified material was pulverized using a blender (7010HS manufactured by Warling Co., Ltd.), and the mixture was repeatedly washed with acetone and filtration.

Then, the solidified material after filtration was dispersed in ion-exchanged water, washed at a liquid temperature of 80°C, and filtered.

Then, the solidified material after the filtration was repeatedly washed with ion-exchanged water and filtered until pH of the filtrate reached the values shown in Table 1. Here, in the "washed with ion-exchanged water", an ion-exchanged water 800 ml was added to the solidified material, and the mixture was stirred and washed at 60°C for 20 minutes.

Then, the solidified material after filtration was dried in a hot air dryer at 180°C for 5 hours to obtain a PEEK.

### (Example 2)

PEEK was obtained in the same manner as in Example 1 except that the amounts of 4,4'-dichlorobenzophenone, hydroquinone, potassium carbonate and diphenylsulfone used were changed as follows.
· 4,4'-dichlorobenzophenone: 289.01 g (1.151 mol)
· Hydroquinone: 123.40 g (1.121 mol)
· Potassium carbonate: 178.12 g (1.289 mol)
· Diphenylsulfone: 970.28 g (4.45 mol)

### (Example 3)

PEEK was obtained in the same manner as in Example 1 except that the amounts of 4,4'-dichlorobenzophenone, hydroquinone, potassium carbonate and diphenylsulfone used were changed as follows.
· 4,4'-dichlorobenzophenone: 284.51 g (1.133 mol)
· Hydroquinone: 124.76 g (1.133 mol)
· Potassium carbonate: 179.96 g (1.302 mol)
· Diphenylsulfone: 980.03 g (4.49 mol)

### (Example 4)

PEEK was obtained in the same manner as in Example 1 except that the amounts of 4,4'-dichlorobenzophenone, hydroquinone, potassium carbonate and diphenylsulfone used were changed as follows.
· 4,4'-dichlorobenzophenone: 143.52 g (0.572 mol)
· Hydroquinone: 61.70 g (0.560 mol)
· Potassium carbonate: 89.06 g (0.644 mol)
· Diphenylsulfone: 485.14 g (2.22 mol)

### (Example 5)

PEEK was obtained in the same manner as in Example 1 except that the amounts of 4,4'-dichlorobenzophenone, hydroquinone, potassium carbonate and diphenylsulfone used were changed as follows.
· 4,4'-dichlorobenzophenone: 144.93 g (0.577 mol)
· Hydroquinone: 61.70 g (0.560 mol)
· Potassium carbonate: 89.06 g (0.644 mol)
· Diphenylsulfone: 485.14 g (2.22 mol)

### (Example 6)

PEEK1 was obtained in the same manner as in Example 1 except that the amounts of 4,4'-dichlorobenzophenone, hydroquinone, potassium carbonate and diphenylsulfone used were changed as follows.
· 4,4'-dichlorobenzophenone: 142.12 g (0.566 mol)
· Hydroquinone: 61.70 g (0.560 mol)
· Potassium carbonate: 89.06 g (0.644 mol)
· Diphenylsulfone: 485.14 g (2.22 mol)

A PEEK2 was obtained in the same manner as in Example 1 except that the amounts of 4,4'-dichlorobenzophenone, hydroquinone, potassium carbonate, and diphenylsulfone used were changed as follows.
· 4,4'-dichlorobenzophenone: 145.64 g (0.580 mol)
· Hydroquinone: 61.70 g (0.560 mol)
· Potassium carbonate: 89.06 g (0.644 mol)
· Diphenylsulfone: 485.14 g (2.22 mol)

The resulting PEEK1 and PEEK2 were mixed by mass of PEEK1:PEEK2 = 20:80 to obtain PEEK of Example 6.

### (Example 7)

In Reference Example 4, PEEK1 and PEEK2 were mixed by mass of PEEK1:PEEK2 = 30:70 to obtain PEEK of Example 7.

### (Example 8)

In Reference Example 4, PEEK1 and PEEK2 were mixed by mass of PEEK1:PEEK2 = 40:60 to obtain PEEK of Example 8.

### (Comparative Example 1)

A commercially available PEEK (450G, manufactured by Victrex) was used as PEEK of Comparative Example 1.

### (Comparative Example 2)

A commercially available PEEK (151G, manufactured by Victolex) was used as PEEK of Comparative Example 2.

### (Comparative Example 3)

A commercially available PEEK (90G, manufactured by Victolex) was used as PEEK of Comparative Example 3.

### (Comparative Example 4)

A commercially available PEEK (VESTAKEEP ^{®} 4000P, manufactured by Evonik) was used as PEEK of Comparative Example 4.

### (Comparative Example 5)

A commercially available PEEK (VESTAKEEP ^{®} 2000P, manufactured by Evonik) was used as PEEK of Comparative Example 5.

### (Comparative Example 6)

KetaSpire ^{®} KT-820, manufactured by Solvay) was used as PEEK of Comparative Example 6.

### (Comparative Example 7)

A commercially available PEEK (FD PEEK_330P, obtained from WESTONE) was used as PEEK of Comparative Example 7.

The combustion ion chromatograph

The amount a of fluorine atoms and the amount b of chlorine atoms in PEEK were measured by combustion ion chromatography.

Specifically, a sample was introduced into a combustion furnace, burned in a combustion gas containing oxygen, and the generated gas was collected in an absorption liquid, and then the absorption liquid was separated and quantified by ion chromatography. A quantitative value was obtained based on a calibration curve prepared using a reference of known concentrations. The measurement conditions are shown below.

### <Sample burning>

Combustion equipment: AQF-2100H incinerator manufactured by Mitsubishi Chemical Analytech Co., Ltd Temperature setting: Previous 800°C, rear 1100°C
Argon flow rate: 400 ml/min
Oxygen flow rate: 200 ml/min
Absorption liquid: aqueous hydrogen peroxide

### <Ion chromatograph>

Analyzer: Integrion manufactured by Thermo Fisher Scientific Inc.
Columns: using in conjunction with (Dionex lonPacAG12A) as a guard column and (Dionex IonPac AS12A) as a separation column (both columns manufactured by DIONEX corporation)
Eluent: Na₂CO₃ (2.7 mmol/l)+NaHCO (0.3 mmol/l)
Flow rate: 1.5 ml/min
Column temperature: 30°C
Measurement mode: suppressor method
Detector: electrical conductivity detector

The measurement results are shown below. In the above-described measuring methods, the limits detection of the fluorine atom and the chlorine atom are 2 mg/kg. If these atoms are below the detectable limit, they are designated as "< 2 mg/kg".
· Example 1: a < 2 mg/kg, b = 3200 mg/kg
· Example 2: a < 2 mg/kg, b = 2800 mg/kg
· Example 3: a < 2 mg/kg, b = 1400 mg/kg
· Example 4: a < 2 mg/kg, b = 2200 mg/kg
· Example 5: a < 2 mg/kg, b = 2600 mg/kg
· Example 6: a < 2 mg/kg, b = 5600 mg/kg
· Example 7: a < 2 mg/kg, b = 5000 mg/kg
· Example 8: a < 2 mg/kg, b = 4600 mg/kg
· Comparative Example 1: a = 1100 mg/kg, b < 2 mg/kg
· Comparative Example 2: a = 1800 mg/kg, b < 2 mg/kg
· Comparative Example 3: a = 2200 mg/kg, b < 2 mg/kg
· Comparative Example 4: a = 1500 mg/kg, b < 2 mg/kg
· Comparative Example 5: a = 1900 mg/kg, b < 2 mg/kg
· Comparative Example 6: a = 1500 mg/kg, b < 2 mg/kg
· Comparative Example 7: a = 2100 mg/kg, b < 2 mg/kg

### Melt viscosity measurement

For each of PEEK of Examples 1 to 8 and Comparative Examples 1 to 3, the melt viscosity at a predetermined shear rate was measured using a capillary 1D manufactured by Toyo Seiki Seisakusho Co., Ltd.in accordance with JIS K 7199:1999 under the following measurement conditions.

### [Measurement condition]

· Measuring temperature (resin temperature): 400°C
· Cylinder bore size: 9.55 mm
· Capillary bore diameter: 1.0 mm
· Capillary length: 20.0 mm
· Operation:

The samples were previously dried at 150°C for two hours or more. The sample was loaded into the cylinder, the piston was inserted, and the sample was preheated in the cylinder for 4 minutes. At a predetermined shear rate, the load required to extrude the molten sample from the capillary was measured, and the viscosity (melt viscosity) of the resin passing through the capillary was calculated.

The melt viscosity [Pa·s] measured in shear rate 12 [1/s] was taken as η₁₂, and melt viscosity [Pa·s] measured in shear rate 1200 [1/s] was used as η₁₂₀₀.

The above results are shown in Table 1.

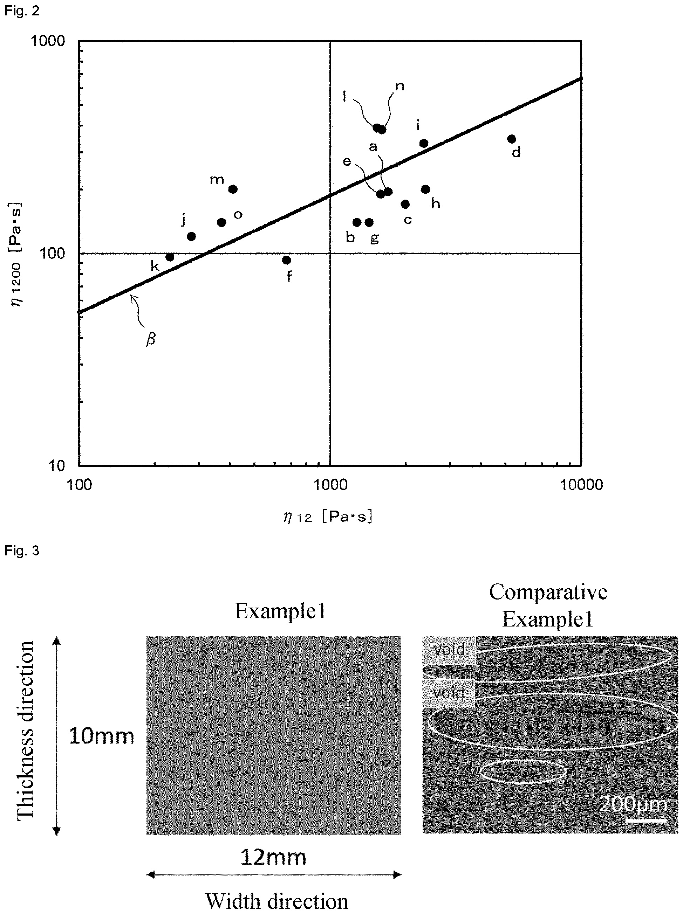

In addition, Fig. 2 shows a plot on both logarithmic scales in which the horizontal axis represents the melt viscosity η₁₂ and the vertical axis represents the melt viscosity η₁₂₀₀. In the plot diagram, β is a plot corresponding to η₁₂₀₀=4.2×η₁₂^{0.55}. A plot below this graph β satisfies η₁₂₀₀<_{4.2×η12}^{0.55} criteria. In the plot diagram, plot a corresponds to Example 1, plot b corresponds to Example 2, plot c corresponds to Example 3, plot d corresponds to Example 4, plot e corresponds to Example 5, plot f corresponds to Example 6, plot g corresponds to Example 7, plot h corresponds to Example 8 (the above plot satisfies the condition of η₁₂₀₀<4.2×η₁₂^{0.55}), plot i corresponds to Comparative Example 1, plot j corresponds to Comparative Example 2, plot k corresponds to Comparative Example 3, plot I corresponds to Comparative Example 4, plot m corresponds to Comparative Example 5, plot n corresponds to Comparative Example 6, and plot o corresponds to Comparative Example 7 (the above plot does not satisfy the condition of η₁₂₀₀<4.2×η₁₂^{0.55}).

**Table 1**

| | Amount b of chlorine atoms [mg/kg] | η₁₂ [Pa·s] | η₁₂₀₀ [Pa·s] | 4.2×η₁₂^{0.55} |
|---|---|---|---|---|
| Example 1 | 3200 | 1700 | 195 | 251 |
| Example 2 | 2800 | 1280 | 140 | 215 |
| Example 3 | 1400 | 1990 | 170 | 274 |
| Example 4 | 2200 | 5290 | 345 | 469 |
| Example 5 | 2600 | 1590 | 190 | 242 |
| Example 6 | 5600 | 670 | 93 | 151 |
| Example 7 | 5000 | 1430 | 140 | 228 |
| Example 8 | 4600 | 2400 | 200 | 304 |
| Comparative Example 1 | <2 | 2360 | 330 | 301 |
| Comparative Example 2 | <2 | 280 | 120 | 93 |
| Comparative Example 3 | <2 | 230 | 96 | 84 |
| Comparative Example 4 | <2 | 1540 | 390 | 238 |
| Comparative Example 5 | <2 | 410 | 200 | 115 |
| Comparative Example 6 | <2 | 1610 | 382 | 244 |
| Comparative Example 7 | <2 | 370 | 140 | 109 |

### Evaluation of molding processability (production of aromatic polyether/continuous fiber composite material)

For each of PEEK of Example 1 and Comparative Example 1, the moldability was evaluated by the following methods.

PEEK was first melted and retained at 400°C for 2 minutes using a flat mold for press forming, held under 10 MPa pressure for 1 minute, and cooled at 20°C for 1 minute to obtain a film having a thickness of 200 µm and a film having a thickness of 100 µm. In order to adjust the thickness of the film, a polyimide film or an aluminum plate was appropriately used as a spacer. The resulting films were cut into 11cm×11cm and used in the following steps.

As the continuous fiber, a woven fabric made of carbon fiber (manufactured by Mitsubishi Chemical Corporation: PYROFIL woven fabric, TR3110M, basis weight 200 g/m²) was prepared. The fabric is cut into 11 cm square (longitudinal 11 cm, lateral 11 cm). The length of the continuous fiber (carbon fiber) contained in the fabric is 11cm or more.

Seven films obtained and six fabrics were alternately stacked so that the fabrics were located between the films. At this time, a film of 200 µm was disposed between the woven fabrics, and a film of 100 µm was disposed in the outermost layer. The stacked body was sandwiched with a polyimide film having a thickness of 100 µm, placed in a press mold having a convex mold and a concave mold which were previously heated to 420°C, and pressed (melt-pressed) stepwise at a press pressure 10 MPa for 5 minutes and a 100 MPa for 25 minutes under conditions of 420°C, and then returned to atmospheric pressure and cooled to 30°C to obtain an aromatic polyether/continuous fiber composite. When both of PEEK of Examples 1 to 5 and Comparative Example 1 were used, the thickness of the aromatic polyether/continuous fiber composite material was 1.7 mm, and the volume amount (Vf) of the continuous fiber (carbon fiber) was 40%.

Here, the gap α between the outer periphery of the fitting portion of the convex mold constituting the press mold used in the melt press and the inner periphery of the fitting portion of the concave mold is 100 µm (see Fig. 1).

The presence or absence of leakage into the gap α of PEEK associated with the melt pressing (leakage preventive property) was evaluated by the following criteria.

### [Evaluation criteria]

∘: There is no leakage.
×: There is leakage.

In addition, the impregnation property of PEEK into the fabric was evaluated by the following criteria. Using a three-dimensional measurement X-ray CT device (manufactured by Yamato Scientific Co., Ltd., TDM1000-IS), the source-sample distance: 28 mm, voltage/current: 55 kV/ 20 µA, irradiation time: 32 minutes to observe the internal structure, PEEK and the presence or absence of the portion where the fabric is not present (void), was evaluated by the following criteria.

### [Evaluation criteria]

∘: There is no void.
×: There is a void.

The above results are shown in Table 2.

Fig. 3 shows images of the interior structure of the aromatic polyether/continuous fiber composite materials imaged by a three-dimensional X-ray CT device in evaluating the impregnation measurings described above.

**Table 2**

| | Leakage preventive property | Impregnation property |
|---|---|---|
| Example 1 | ○ | ○ |
| Comparative Example 1 | × | × |

### (Evaluation)

As can be seen from Table 2, when the aromatic polyether satisfies the condition of η₁₂₀₀<_{4.2×η12}^{0.55} conditions, leakage into the gap α is prevented and the moldability is excellent.

### 2. Tests on MFR₄/MFR₃₀ ≧ 1.1

### (Reference Example 1)

A commercially available PEEK (450G, manufactured by Victorex) was frozen and ground.

Then, an aqueous solution containing 10% by mass of potassium carbonate was added to the obtained powder so that 0.09 parts by mass of potassium carbonate concentration to 100 parts by mass of PEEK, and mixed well.

The mixtures were then dried in a hot air dryer at 180°C for 5 hours to obtain a PEEK.

### (Reference Example 2)

A PEEK was obtained in the same manner as in Reference Example 1 except that a commercially available PEEK (manufactured by Victrex, 450G) was used instead of a commercially available 151G (manufactured by Victrex).

The total K (Potassium) concentration of PEEK of Comparative Example 1 is less than the lower limit of quantitation 1 ppm.

### The combustion ion chromatograph

The amount a of fluorine atoms and the amount b of chlorine atoms in PEEK were measured by the burning ion chromatography method in the same manner as in the above "1. Experiment of the conditions of η₁₂₀₀<4.2×η₁₂^{0.55}".

The measurement results are shown below. In the above-described measuring methods, the limits of detecting the fluorine atom and the chlorine atom are 2 mg/kg. If these atoms are below the detectable limit, they are designated as " < 2 mg/kg".
· Reference Example 1: a = 1100 mg/kg, b < 2 mg/kg
· Reference Example 2: a = 1800 mg/kg, b < 2 mg/kg

### Measuring MFR (melt flow rate)

For each of PEEK of Example 1, 2, Comparative Example 1, and Reference Examples 1 and 2, MFR was measured in accordance with JIS K 7210-1:2014(ISO 1133-1:2011 using a melt indexer (L-220) manufactured by Tateyama High-Technologies Co., Ltd.

### [Measurement condition]

· Measuring temperature (resin temperature): 380°C
· Measuring load: 2.16 kg
· Cylinder bore size: 9.550 mm
· Die bore diameter: 2.095 mm
· Die length: 8.000 mm
· Piston head length: 6.35 mm
· Piston head diameter: 9.474 mm
· Piston weight: 110.0 g (the measured load includes the piston weight)
· Operation:

The samples were previously dried at 150°C for two hours or more. The sample was charged into the cylinder, the piston was inserted, and the sample was preheated in the cylinder for a predetermined time. A load was then applied and the piston guide removed to extrude the molten sample from the die. The sample was cut at a predetermined range of piston movement and a predetermined time (t [s]) and the mass was measured (m [g]). MFR was obtained from the following formula. MFR [g/10 min] = 600/t×m

MFR measured when the preheating time was 4 minutes was MFR₄ [g/10 min], and MFR measured when the preheating time was 30 minutes was MFR₃₀ [g/10 min], and the ratio (MFR₄/MFR₃₀) of these values was calculated.

The above results are shown in Table 3.

**Table 3**

| | pH at washing | Amount of potassium carbonate based on 100 parts by mass of PEEK | MFR₄ [g/10min] | MFR₃₀ [g/10min] | MFR₄/MFR₃₀ |
|---|---|---|---|---|---|
| Example 1 | 8.8 | 0 | 5.3 | 2.8 | 1.9 |
| Example 2 | 8.1 | 0 | 12.2 | 10.8 | 1.1 |
| Reference Example 1 | - | 0.09 | 0.32 | 0.11 | 2.9 |
| Reference Example 1 | - | 0.09 | 6.7 | 2.6 | 2.6 |
| Comparative Example 1 | - | 0 | 3.2 | 3.2 | 1.0 |

### Measurement of mechanical strength (production of aromatic polyether/continuous fiber composite material)

Using each of PEEK of Example 1 and Comparative Example 1, an aromatic polyether/continuous fiber composite material was produced in the same manner as in "Evaluation of moldability (production of aromatic polyether/continuous fiber composite material)" described above.

The aromatic polyether/continuous fiber composite materials were cut into 1 cm sizes using a diamond cutter and dried at 150°C for 12 hours to produce specimens. Using this specimen, flexural strength [MPa] and flexural modulus [GPa] were measured according to ISO 178:2010 at 23°C under the following conditions: radial 5 mm of the indenter, distance 6 cm between fulcrums, and 3 mm/min of test rate.

The above results are shown in Table 4.

**Table 4**

| | Flexural strength [MPa] | Flexural modulus [GPa] |
|---|---|---|
| Example 1 | 481 | 39 |
| Comparative Example 1 | 384 | 33 |

### (Evaluation)

From Table 4, it can be seen that the aromatic polyether satisfies the condition of MFR₄/MFR₃₀ ≧1.1, thereby exhibiting excellent mechanical strength.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

1. An aromatic polyether comprising a structural unit represented by the following formula (1) and a structural unit represented by the following formula (2),
wherein the melt viscosity η₁₂ [Pa.s] measured at a shear rate 12 [1/s] and the melt viscosity η₁₂₀₀ measured at a shear rate 1200 [1/s] satisfy a condition of η₁₂₀₀<4.2×η₁₂^{0.55}, when the aromatic polyether is melted at 400°C.

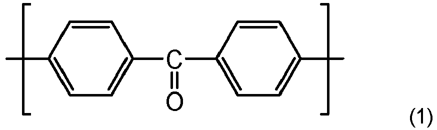

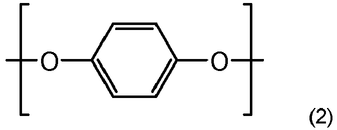

2. The aromatic polyether according to claim 1, which comprises a structural unit represented by the following formula (3).

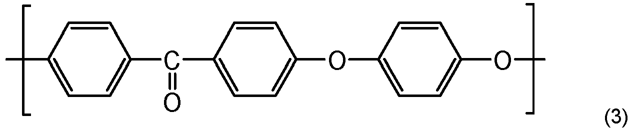

3. The aromatic polyether according to claim 1 or 2, which satisfies one or both of the following conditions (A) and (B):
(A) the amount a of fluorine atoms is less than 2 mg/kg,
(B) the amount b of chlorine atoms is 2 mg/kg or more.

4. A composition comprising the aromatic polyether according to any one of claims 1 to 3.

5. A composition comprising an aromatic polyether,
wherein the aromatic polyether comprises a structural unit represented by the following formula (1) and a structural unit represented by the following formula (2), and
the melt viscosity η₁₂ [Pa·s] measured at a shear rate 12 [1/s] and the melt viscosity η₁₂₀₀ measured at a shear rate 1200 [1/s] satisfy a condition of η₁₂₀₀<4.2×η₁₂^{0.55}, when the composition is melted at 400°C.

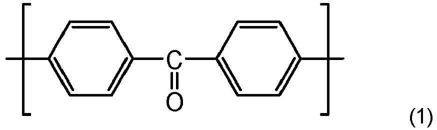

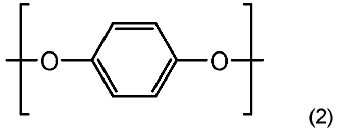

6. The composition according to claim 5, wherein the aromatic polyether comprises a structural unit represented by the following formula (3).

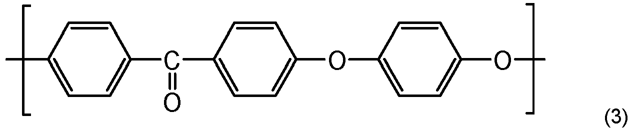

7. The composition according to claim 5 or 6, which satisfies one or both of the following conditions (A) and (B):
(A) the amount a of fluorine atoms is less than 2 mg/kg,
(B) the amount b of chlorine atoms is 2 mg/kg or more.

8. A film comprising the aromatic polyether according to any one of claims 1 to 3 or the composition according to any one of claims 4 to 7.

9. A powder comprising the aromatic polyether according to any one of claims 1 to 3 or the composition according to any one of claims 4 to 7.

10. A pellet comprising the aromatic polyether according to any one of claims 1 to 3 or the composition according to any one of claims 4 to 7.

11. The aromatic polyether according to any one of claims 1 to 3, the composition according to any one of claims 4 to 7, the film according to claim 8, the powder according to claim 9 or the pellet according to claim 10 for use in the production of a composite material comprising an aromatic polyether and a continuous fiber.

12. Use of the aromatic polyether according to any one of claims 1 to 3, the composition according to any one of claims 4 to 7, the film according to claim 8, the powder according to claim 9 or the pellet according to claim 10 for producing a composite material comprising an aromatic polyether and a continuous fiber.

13. A method for producing a composite material, wherein the composite material is produced using the aromatic polyether according to any one of claims 1 to 3, the composition according to any one of claims 4 to 7, the film according to claim 8, the powder according to claim 9 or the pellet according to claim 10, and
a continuous fiber.

14. The method for producing a composite material according to claim 13, which comprises:
compounding the aromatic polyether, the composition, the film, the powder or the pellet, and the continuous fiber.

15. The method for producing a composite material according to claim 13, which comprises:
pressing the aromatic polyether, the composition, the film, the powder or the pellet, and the continuous fiber under heating.

16. A composite material produced using the aromatic polyether according to any one of claims 1 to 3, the composition according to any one of claims 4 to 7, the film according to claim 8, the powder according to claim 9 or the pellet according to claim 10, and
a continuous fiber.

17. A composite material comprising the aromatic polyether according to any one of claims 1 to 3 or the composition according to any one of claims 4 to 7, and
a continuous fiber.
